(19) Europäisches Patentamt / European Patent Office / Office européen des brevets

(11) **EP 3 725 025 B1**

(12) **FASCICULE DE BREVET EUROPEEN**

(45) Date de publication et mention de la délivrance du brevet:
**09.08.2023 Bulletin 2023/32**

(21) Numéro de dépôt: **18811868.1**

(22) Date de dépôt: **10.12.2018**

(51) Classification Internationale des Brevets (IPC):
***H04L 9/08*** (2006.01)

(52) Classification Coopérative des Brevets (CPC):
**H04L 9/0866; H04L 9/0877;** H04L 2209/805

(86) Numéro de dépôt international:
**PCT/EP2018/084203**

(87) Numéro de publication internationale:
**WO 2019/115463 (20.06.2019 Gazette 2019/25)**

(54) **PROCEDE DE COMMUNICATION SECURISE**

SICHERES KOMMUNIKATIONSVERFAHREN

SECURE COMMUNICATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2017 FR 1761950**

(43) Date de publication de la demande:
**21.10.2020 Bulletin 2020/43**

(73) Titulaires:
• **Airbus Defence and Space SAS**
**31402 Toulouse Cedex 4 (FR)**
• **Cassidian Cybersecurity SAS**
**78990 Elancourt (FR)**

(72) Inventeurs:
• **PABST, Nicolas**
**78990 Elancourt (FR)**
• **DUPUIS, Vincent**
**92500 Rueil Malmaison (FR)**
• **FRANCQ, Julien**
**78890 Elancourt (FR)**
• **BRUN, Paul-Emmanuel**
**78590 Noisy Le Roi (FR)**

(74) Mandataire: **Cabinet Camus Lebkiri**
**25 rue de Maubeuge**
**75009 Paris (FR)**

(56) Documents cités:
• **Denis Sitenkov: "Access Control in the Internet of Things", , 1 janvier 2014 (2014-01-01), XP055517435, Extrait de l'Internet: URL:http://www.diva-portal.org/smash/get/d iva2:872003/FULLTEXT01.pdf [extrait le 2018-10-19]**
• **TILOCA MARCO ET AL: "On improving resistance to Denial of Service and key provisioning scalability of the DTLS handshake", INTERNATIONAL JOURNAL OF INFORMATION SECURITY (IJIS), SPRINGER, HEIDELBERG, DE, vol. 16, no. 2, 25 mars 2016 (2016-03-25), pages 173-193, XP036175021, ISSN: 1615-5262, DOI: 10.1007/S10207-016-0326-0 [extrait le 2016-03-25]**
• **MALISA VUCINIC ET AL: "OSCAR: Object security architecture for the Internet of Things", AD HOC NETWORKS, vol. 32, 1 septembre 2015 (2015-09-01), pages 3-16, XP055550962, AMSTERDAM, NL ISSN: 1570-8705, DOI: 10.1016/j.adhoc.2014.12.005**
• **Z Shelby ET AL: "Internet Engineering Task Force (IETF)" In: "IETF STANDARD, INTERNET ENGINEERING TASK FORCE > RFC5849", 1 juin 2014 (2014-06-01), IETF, CH, XP055550964, ISSN: 2070-1721 le document en entier**

- **KARI KOSTIAINEN ET AL: "On-board credentials with open provisioning", INFORMATION, COMPUTER, AND COMMUNICATIONS SECURITY, ACM, 2 PENN PLAZA, SUITE 701 NEW YORK NY 10121-0701 USA, 10 mars 2009 (2009-03-10), pages 104-115, XP058175312, DOI: 10.1145/1533057.1533074 ISBN: 978-1-60558-394-5**

**Description**

**DOMAINE TECHNIQUE DE L'INVENTION**

La présente invention appartient au domaine des procédés de communication sécurisés et notamment dans les réseaux intégrant des objets connectés dits « IoT » (Internet of Things).

**ETAT DE LA TECHNIQUE**

Les systèmes basés sur des objets connectés sont aujourd'hui très utilisés et leur exploitation devrait aller croissante. Un exemple est fourni par les capteurs installés dans les véhicules connectés. Ces capteurs connectés sont par exemple utilisés pour superviser des flottes de véhicules sur la base des données fournies par les capteurs. Un autre exemple est fourni par les systèmes de production incluant des fonctionnalités dédiées à la maintenance ou à la sécurité. Les données fournies par des capteurs ou des sondes installés, par exemple, sur un poste de travail ou sur du matériel de communication, peuvent être utilisées dans le but d'anticiper les délais d'entretien ou des mises à jour et ainsi permettre une planification plus efficace des interventions de maintenance.

Dans les systèmes connectés par un ou plusieurs réseaux, l'intégrité et la sécurité des données échangées restent des points d'importance majeure. La conservation de la confidentialité des informations est de plus en plus renforcée, par exemple, pour des raisons stratégiques ou pour des raisons de protection des données personnelles. Le contrôle de l'intégrité des données est par exemple renforcé dans le contexte des menaces de cyber-attaques ou dans des environnements sécurisés correspondant à des domaines technologiques sensibles.

Des systèmes de communication utilisent par exemple des protocoles de sécurisation des données du type TLS ou DTLS. Ces protocoles sont généralement exploités par des objets connectés de type smartphone. La mise en oeuvre de ces protocoles implique toutefois l'utilisation d'une part importante des ressources mises à disposition par les calculateurs embarqués. Un tel protocole n'est pas adapté par exemple pour des objets connectés de type sonde ou disposant d'une puissance de calcul limitée. Les objets connectés peuvent également être limités par leurs réserves d'énergie, les calculs complexes (par exemple, cryptographiques) entraînant une consommation importante d'énergie. Les calculs sont par exemple considérés comme trop complexes lorsque les temps de calculs ou l'énergie nécessaire à ces calculs ne sont pas compatibles avec les besoins opérationnels. Les réseaux peuvent également se trouver limités, en termes de ressources, par leurs débits ou par les ressources matérielles mises en oeuvre pour la gestion des communications. Des exemples de mise en oeuvre du protocole DTLS sont illustrées par exemple dans les documents RFC5246 ou RFC5077.

D'autres méthodes proposent des solutions s'appuyant sur l'architecture réseau, mais ces solutions, telles que ZigBee ou LoRa, n'assurent généralement pas une sécurité de bout-en-bout.

**PROBLEME TECHNIQUE**

Il apparaît ainsi le besoin de fournir un procédé de communication sécurisé robuste et simple à déployer conservant une grande souplesse dans la gestion des objets connectés.

**RESUME DE L'INVENTION**

Pour pallier ces problèmes techniques, la présente propose un procédé de communication sécurisé entre au moins une première entité et au moins une deuxième entité en liaison de communication dans au moins un réseau comprenant :

- une étape de chiffrement, par la première entité, par un algorithme de chiffrement symétrique, d'un contenu par une première clé propre à la première entité;

- une étape d'agrégation, en un message, du contenu chiffré avec au moins un paramètre de génération de clé propre à la première entité;

- une étape d'envoi, par la première entité, du message à la deuxième entité;

- une étape de détermination, par la deuxième entité, de ladite première clé propre à la première entité à l'aide dudit paramètre de génération de clé propre à la première entité, d'un premier secret connu par la deuxième entité et d'une fonction de génération de clé;

- une étape de déchiffrement, par la deuxième entité, du contenu chiffré du message reçu, à l'aide de la première clé.

Selon une particularité, le procédé comprend une étape supplémentaire d'envoi d'une réponse au message, chiffrée par l'algorithme de chiffrement symétrique à l'aide de la première clé et/ou une étape supplémentaire d'effacement de la première clé en mémoire de la deuxième entité.

Selon une autre particularité, le procédé comprend une étape préalable d'initialisation de chaque deuxième entité comprenant une mémorisation dudit premier secret.

Selon une autre particularité, le procédé comprend des étapes préalables, à savoir :

- une étape de transmission, par chaque première entité, à une entité gestionnaire, du paramètre de génération de clé propre à chaque première entité pour l'obtention d'une deuxième clé;

- une étape de génération, par l'entité gestionnaire, de chaque deuxième clé propre à chaque première entité, à partir dudit premier secret détenu par l'entité gestionnaire, dudit paramètre de génération de clé propre à chaque première entité et de ladite fonction de génération de clé;

- une étape de fourniture de chaque première clé à chaque première entité ;

le procédé comprenant des étapes additionnelles à savoir :

- une étape de génération, par chaque première entité, de la première clé, par une fonction de dérivation, à partir de sa deuxième clé et d'au moins un paramètre de dérivation,

- une étape d'agrégation, par chaque première entité, dudit paramètre de dérivation au message destiné à la deuxième entité,

- une étape de dérivation, par la deuxième entité, pour l'obtention de la première clé à partir de la deuxième clé générée à partir du premier secret et du paramètre de génération de clé propre à la première entité fourni en entrée de ladite fonction de génération de clé.

Selon une autre particularité, ledit paramètre de dérivation comprend au moins un aléa généré par ladite première entité.

Selon une autre particularité, les étapes de transmission du paramètre de génération pour la deuxième clé et de fourniture de ladite deuxième clé sont réalisées par l'envoi d'une requête d'obtention de la deuxième clé et d'une réponse à cette requête, chaque première entité étant en liaison de communication avec l'entité gestionnaire dans ledit réseau.

Selon une autre particularité, la requête d'obtention de la deuxième clé et la réponse à cette requête sont chiffrées à l'aide d'une troisième clé mémorisée par chaque première entité et régénérée par l'entité gestionnaire à partir d'un deuxième secret détenu par l'entité gestionnaire, dudit paramètre de génération de clé propre à chaque première entité et de ladite fonction de génération de clé, le procédé comprenant des étapes préalables à savoir :

- une étape de transmission, par chaque première entité, à l'entité gestionnaire, du paramètre de génération de clé propre à chaque première entité pour l'obtention de la troisième clé;

- une étape de génération, par l'entité gestionnaire, de chaque troisième clé propre à chaque première entité, à partir dudit deuxième secret détenu par l'entité gestionnaire, dudit paramètre de génération de clé propre à chaque première entité et de ladite fonction de génération de clé;

- une étape de fourniture de chaque troisième clé à chaque première entité.

- une étape d'effacement, en mémoire de l'entité gestionnaire, de chaque troisième clé.

Selon une autre particularité, la transmission par chaque première entité, à l'entité gestionnaire, du paramètre de génération de clé propre à chaque première entité pour l'obtention de la troisième clé est réalisée en même temps qu'une authentification de chaque première entité auprès de l'entité gestionnaire.

Selon une autre particularité, la transmission par chaque première entité, à l'entité gestionnaire, du paramètre de génération de clé propre à chaque première entité pour l'obtention de la troisième clé est réalisée conjointement à la transmission d'une clé publique, cette clé publique et la clé privée correspondante étant mémorisée par ladite première entité, la troisième clé étant ainsi chiffrée à l'aide de cette clé publique, par l'entité gestionnaire, préalablement à sa transmission à ladite première entité.

Selon une autre particularité, ledit au moins un paramètre de génération de clé propre à la première entité comprend au moins un identifiant de cette première entité.

Selon une autre particularité, ledit au moins un paramètre de génération de clé propre à la première entité comprend en outre une date d'expiration de la clé générée par la première entité.

Un autre objet de l'invention concerne un système sécurisé d'échange de données entre au moins une première entité et au moins une deuxième entité en liaison de communication dans au moins un réseau, lesdites première et deuxième entités comprenant des modules de calcul, de mémorisation et des interfaces de communication réseau, caractérisé en ce que chaque première entité mémorise :

- un programme de chiffrement et de déchiffrement par un algorithme de chiffrement symétrique, à partir d'une première clé et

- un programme de transmission de données chiffrées agrégées avec au moins un paramètre propre à la première entité permettant une génération de la clé,

et en ce que chaque deuxième entité mémorise :

- un programme de régénération de clé à partir dudit paramètre de génération de clé propre à la première entité et d'un secret connu par la deuxième entité et

- un programme de chiffrement et de déchiffrement par ledit algorithme de chiffrement symétrique, à partir de ladite première clé.

Selon une autre particularité, le système comprend une entité gestionnaire comprenant un programme de génération de clé à partir dudit paramètre de génération de clé propre à chaque première entité et dudit secret détenu par l'entité gestionnaire.

Selon une autre particularité, l'entité gestionnaire comprenant un programme d'initialisation de chaque deuxième entité comprenant l'initialisation du premier secret connu de chaque deuxième entité.

Selon une autre particularité, le système comprend une pluralité de deuxièmes entités organisées en au moins un lot, de façon à accéder à une même ressource par le même lot de deuxièmes entités partageant le même secret.

Selon une autre particularité, chaque première et deuxième entité comprend un programme de dérivation de clé en fonction d'au moins un paramètre de dérivation.

Selon une autre particularité, le système est apte à exécuter le procédé selon l'invention.

Un premier avantage de l'invention réside dans la simplicité de son déploiement permettant à des objets connectés de simplement obtenir une clé principale et une ou plusieurs clés auxiliaires pour accéder à une ou plusieurs ressources. L'augmentation des unités de contrôle pour répondre à une extension des requêtes clientes est également facilitée. Le procédé selon la présente invention apporte ainsi une grande flexibilité dans son adaptation.

Un autre avantage de l'invention réside dans la mise en oeuvre d'une sécurisation des données échangées de bout en bout et indépendamment du type de réseaux sur lequel ou sur lesquels circule les données.

Un avantage de l'invention réside encore dans le déportement des calculs des clés principale et auxiliaire dans l'entité de gestion ou dans les entités de contrôle. Ainsi les entités clientes peuvent se présenter sous la forme d'objets connectés bénéficiant de faibles ressources, les prestations en termes de latence et de débit restant performantes. Par ailleurs, il n'est pas nécessaire pour les entités de gestion ou de contrôle de mémoriser l'ensemble des clés utilisées par l'ensemble des entités client.

L'invention présente également l'avantage de permettre des chiffrements par différentes entités clientes utilisant des clés différentes pour chacun des clients, sans nécessiter d'importants moyens de gestion des communications sécurisées.

L'invention a également pour avantage de permettre un renouvellement simple des clés principale et auxiliaire. De plus la date d'expiration peut être transmise avec le message chiffré en tant que paramètre de régénération de la clé utilisée pour le chiffrement.

Un avantage de l'invention réside encore dans le fait que les changements opérés dans les clés de chiffrement peuvent être réalisés simplement et à plusieurs niveaux selon différentes fréquences. La clé auxiliaire dérivée est par exemple valable une journée, la clé auxiliaire restant par exemple valable une semaine, tandis que la clé principale peut rester valable deux semaines. De plus, les secrets pour les générations des clés principales et auxiliaires ne sont jamais transmis aux entités clientes.

De manière avantageuse, il n'est pas nécessaire pour une entité de contrôle ou pour l'entité gestionnaire de sauvegarder les différentes clés de chiffrement utilisées par les différentes entités clientes, ce qui permet d'économiser des ressources et de rendre le procédé selon l'invention particulièrement flexible et adaptable à un environnement évolutif.

**LISTE DE FIGURES**

D'autres caractéristiques de l'invention ressortiront clairement de la description qui en est donnée ci-dessous, à titre indicatif et nullement limitatif, en référence aux figures annexées, parmi lesquelles :

- La figure 1 montre un exemple de procédé sécurisé selon l'invention ;
- La figure 2 montre un exemple d'échanges de données pour l'initialisation d'une clé propre à une entité cliente lui permettant d'adresser des requêtes chiffrées à une entité gestionnaire ;
- La figure 3 illustre un exemple d'échanges de données pour l'initialisation d'une clé propre à une entité cliente lui permettant d'adresser des requêtes chiffrées à une entité de contrôle initialisée par l'entité gestionnaire ;
- La figure 4 montre un exemple d'échanges sécurisés entre une entité cliente et une entité de contrôle ;
- La figure 5 montre un exemple de système sécurisé d'échange de données selon l'invention.

**DESCRIPTION DETAILLEE DE L'INVENTION**

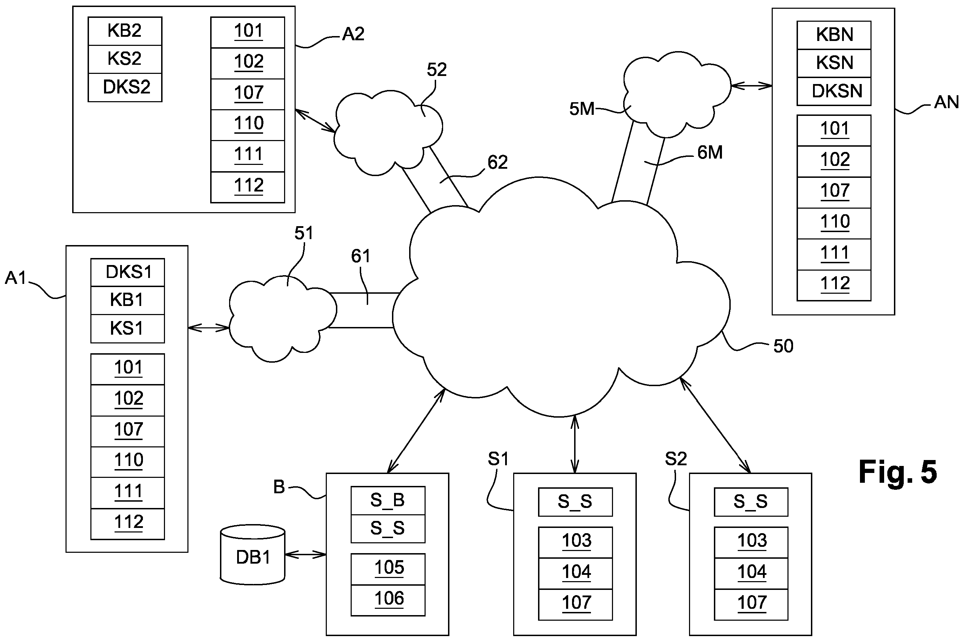

Comme représenté à la figure 5, une entité gestionnaire B est reliée à un réseau de communication 50. Plusieurs entités de contrôle S1 et S2 sont également reliées à ce réseau 50 de communication. Ce dernier réseau 50 est relié par ailleurs à d'autres réseaux 51, 52 et 5M via des passerelles 61, 62 et 6M. Des entités clients A1, A2 et AN peuvent ainsi se trouver en liaison de communication avec les entités de contrôle S1 et S2 et avec l'entité gestionnaire B. Le nombre d'entités clientes est susceptible de varier, le nombre d'entités de contrôle pouvant alors être augmenté ou diminué en conséquence. Une entité de contrôle est par exemple créée ou résiliée par l'entité gestionnaire B. L'entité gestionnaire, les entités clientes et les entités de contrôle comprennent chacune des modules de calcul, des modules de mémorisation et des interfaces de communication réseau.

Une ou plusieurs entités de contrôle S1 et S2 permettent par exemple l'accès à une ressource. On peut également envisager différents types d'entités de contrôle regroupés en différents lots pour accéder à différentes ressources. Une ressource accédée est par exemple du type application, base de données, librairie, gestionnaire d'accès, gestionnaire d'authentification ou gestionnaire de logs. L'entité de contrôle est par exemple du type proxy inversé ou « reverse proxy » selon la terminologie anglaise. L'entité de contrôle peut par exemple être du type passerelle. L'augmentation du nombre d'entités de contrôle, dans un même lot, pour accéder à une même ressource permet à un plus grand nombre d'entités clientes d'accéder simultanément à cette ressource. Dans un même lot, une nouvelle entité de contrôle peut être créée pour répondre à un volume de requêtes plus important. La nouvelle entité de contrôle sera par exemple créée par l'entité gestionnaire qui lui transfèrera un secret auxiliaire identique au sein d'un même lot. Une telle nouvelle entité de contrôle pourra également être créée sur la base d'une entité de contrôle existante.

Chaque entité de contrôle mémorise un secret auxiliaire S_S, un programme 103 de régénération de clé, un programme 104 de chiffrement et de déchiffrement par algorithme de chiffrement symétrique ainsi qu'un programme 107 de dérivation de clé. Le programme de dérivation est par exemple du type HKDF. Le programme de génération de clé peut par exemple se présenter sous la forme d'un protocole de dérivation du secret tel que NIST-800-108-KDF, X9.63-KDF, NIST-800-56-KDF-A/B, NIST-800-56-KDF-C ou HKDF.

Les entités clients A1, A2 et AN sont par exemple des smartphones, des ordinateurs, des tablettes, des sondes connectées, des capteurs connectés, des actionneurs connectés ou d'autres instruments connectés. Chaque entité cliente mémorise notamment un programme 101 de chiffrement et de déchiffrement par un algorithme de chiffrement symétrique, un programme 102 de transmission de données chiffrées agrégées avec des paramètres destinés à permettre le déchiffrement et un programme 107 de dérivation de clé. Comme représenté à la figure 5, chaque entité cliente mémorise également un programme 110 de chiffrement/déchiffrement par clés asymétriques, un programme 111 de génération d'un aléa et un programme 112 d'horodatage. Le programme de dérivation est par exemple du type HKDF. L'entité cliente A1 mémorise en outre une clé principale KB1, une clé auxiliaire KS1 et une clé auxiliaire dérivée DKS1. L'entité cliente A2 mémorise en outre une clé principale KB2, une clé auxiliaire KS2 et une clé auxiliaire dérivée DKS2. L'entité cliente AN mémorise en outre une clé principale KBN, une clé auxiliaire KSN et une clé auxiliaire dérivée DKSN. Comme détaillé par la suite chaque entité cliente peut détenir des clés principale et auxiliaire qui lui sont propres.

L'entité gestionnaire B détient le secret principal ainsi que les secrets auxiliaires. Les secrets auxiliaires peuvent notamment être créés en fonction des besoins.

L'entité gestionnaire mémorise un programme 105 de génération de clé, un programme 106 d'initialisation des entités de contrôle. L'entité gestionnaire peut également réaliser une authentification des entités clientes grâce à une base de données DB1. Le programme de génération de clé peut par exemple se présenter sous la forme d'un protocole de dérivation d'un secret tel que NIST-800-108-KDF, X9.63-KDF, NIST-800-56-KDF-A/B, NIST-800-56-KDF-C ou HKDF.

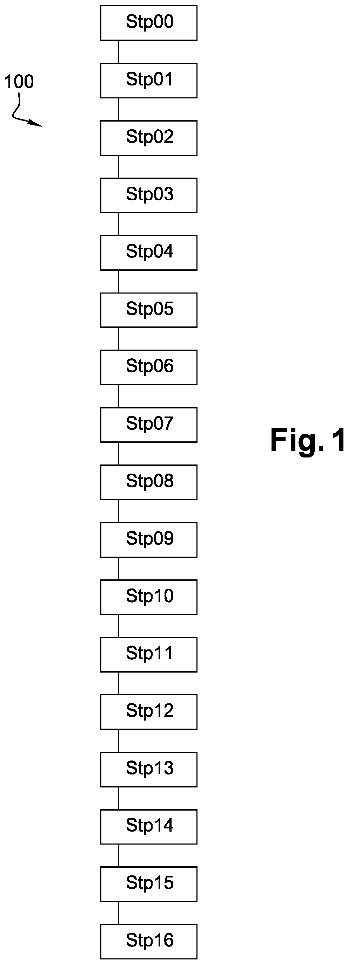

L'exemple de procédé sécurisé selon l'invention, tel que représenté à la figure 1, comprend une étape Stp00 d'initialisation d'une ou plusieurs entités de contrôle (S1, S2) comprenant une initialisation de leur secret auxiliaire S_S. Cette étape peut être réitérée au cours du processus, en fonction des besoins.

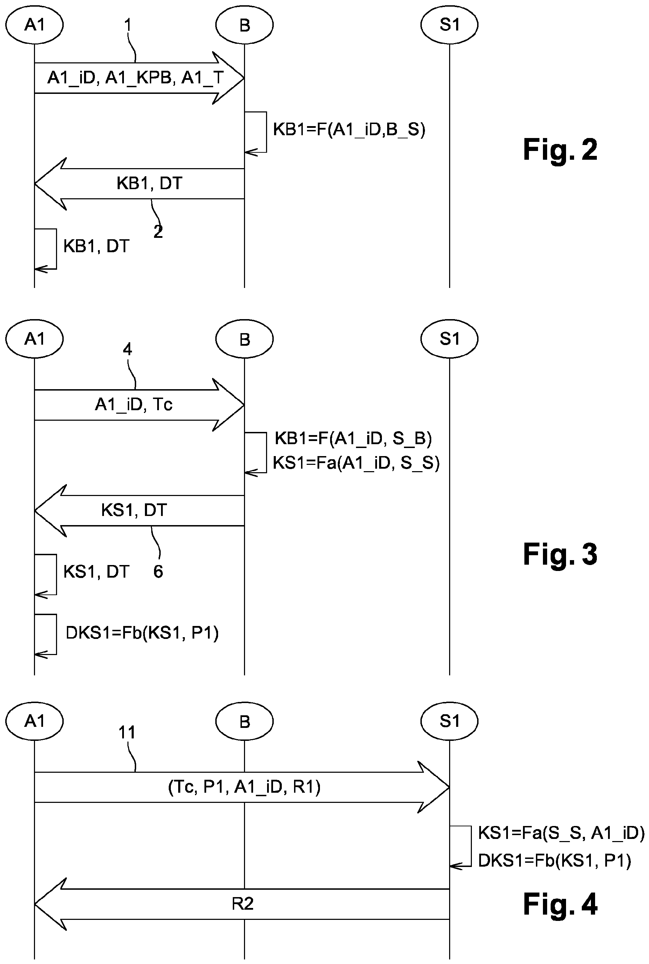

Une étape Stp01 suivante comprend la transmission par l'entité cliente A1, à l'entité gestionnaire B, d'un paramètre A1_ID de génération de clé qui lui est propre pour l'obtention d'une clé principale conjointement à la transmission d'une clé publique. Cette transmission peut être réalisée lors d'une authentification auprès de l'entité gestionnaire ou par une requête d'obtention de clé principale. Le ou les paramètres transmis pour la génération de clé comprennent par exemple un identifiant A1_ID de l'entité cliente A1. Les paramètres de génération de clé peuvent également comprendre un aléa, une heure d'envoi ou de réception ou une date de validité, de façon à garantir l'unicité de la clé principale générée. L'ensemble des paramètres de génération agrégés présentent par exemple une taille inférieure ou égale à 32 bits pour optimiser la bande passante et les temps de calcul. Comme représenté à la figure 2, la requête 1 peut comprendre également une clé publique A1_KPUB mémorisée avec une clé privée par l'entité cliente A1. La requête pour l'obtention de la clé principale peut également comprendre un horodatage A1_T.

Dans une étape Stp02 suivante, l'entité gestionnaire B génère la clé principale KB1 propre à l'entité cliente A1.

$$KB1 = F (B\_S, A1\_ID)$$

La clé principale KB1 est obtenue par une fonction F de génération de clé à partir du secret principale B_S et d'au moins un paramètre de génération tel que l'identifiant A1_ID de l'entité cliente A1. Le paramètre de dérivation peut également comprendre un aléa, un horodatage correspondant à l'envoi de la requête ou à l'arrivée de la requête ou encore une date de validité. Cette clé KB1 générée est par exemple chiffrée à l'aide de la clé publique reçue A1_KPUB avant sa transmission à l'entité client. Un décalage temporel DT par rapport à l'horloge interne de l'entité gestionnaire B est également calculé à partir de l'horodatage A1_T. Ce décalage DT est agrégé à la clé principale KB1, dans la réponse 2 à l'entité cliente A1. La clé principale KB1 générée est par exemple associée à une fenêtre temporelle d'expiration de la clé mémorisée dans la base de données DB1. Lorsqu'un laps de temps supérieur à la fenêtre temporelle d'expiration s'est écoulé, la clé est alors révoquée. Cela permet de renouveler périodiquement les clés utilisées et d'augmenter la sécurité du procédé.

Dans une étape Stp03 suivante, l'entité gestionnaire B réalise la transmission de la clé principale KB1 dans sa réponse 2 à la requête 1. Après transmission, cette clé KB1 est par exemple effacée de la mémoire de l'entité gestionnaire B.

Dans une étape Stp04 suivante, l'entité cliente A1 reçoit la clé principale KB1, la déchiffre éventuellement à l'aide de sa clé privée puis la stocke en mémoire. L'entité cliente mémorise également le décalage temporel reçu DT correspondant à l'écart temporel calculé entre l'heure d'envoi de la requête et l'heure de sa réception. La différence temporelle DT mémorisée par l'entité cliente A1 est utilisée pour corriger un décalage entre l'horloge de l'entité cliente A1 et l'horloge de l'entité gestionnaire B.

Dans une étape Stp05 suivante on réalise une transmission, de l'entité cliente A1, à l'entité gestionnaire B, du paramètre de génération de clé propre pour l'obtention d'une clé auxiliaire KS1 propre à l'entité cliente A1. Cette transmission est par exemple réalisée sous la forme d'une requête 4 chiffrée à l'aide de la clé principale KB1 agrégée à un ou plusieurs paramètres A1_ID pour la génération de la clé principale. L'entité gestionnaire B est alors en mesure de déchiffrer grâce au(x) paramètre(s) de génération de clé principale KB1 fourni(s) et propre à l'entité cliente A1, tout en authentifiant la provenance de la requête. Un paramètre temporel d'émission de requête corrigé Tc prenant en compte l'écart temporel DT entre l'horloge de l'entité cliente A1 et celui de l'entité gestionnaire B est également agrégé à la requête 4. La requête d'obtention de clé auxiliaire comprend au moins un paramètre de génération de clé A1_ID propre à la première entité A, comme par exemple l'identifiant de l'entité cliente A1. D'autres paramètres tels que des aléas, des horodatages ou une date de validité peuvent également être utilisés. L'ensemble des paramètres de génération agrégés présentent par exemple une taille inférieure ou égale à 32 bits pour optimiser la bande passante et les temps de calcul.

Dans une étape Stp06 suivante, on réalise la génération, par l'entité gestionnaire B, de la clé auxiliaire KS1 propre à l'entité cliente A1, à partir dudit secret auxiliaire S_S détenu par l'entité gestionnaire B, du ou des paramètres A1_ID de génération de clé propre à l'entité cliente A1 et de ladite fonction de génération de clé F.

$$KS1 = F (S\_S, A1\_ID)$$

L'entité gestionnaire B vérifie notamment la validité de la requête 4, en vérifiant que la requête est arrivée avant l'expiration d'une fenêtre temporelle de validité de la requête, en fonction du temps Tc d'émission corrigé. Des attaques de type « par rejeu » sont ainsi évitées.

L'entité gestionnaire réalise en outre un calcul de la clé principale KB1 propre à l'entité cliente A1 afin de déchiffrer la requête 4. La clé auxiliaire KS1 générée est par exemple chiffrée par la clé principale KB1 propre à l'entité cliente A1 avant sa transmission. La même clé KB1 est ainsi utilisée pour le chiffrement dans la requête et dans la réponse à cette requête.

$$KB1 = F (S\_B, A1\_ID)$$

Dans une étape Stp07 suivante, on réalise une fourniture de la clé auxiliaire KS1 à l'entité cliente A1, par réponse 6 à la requête 4. Après transmission, la clé auxiliaire KS1 et la clé principale KB1 précédemment générées sont effacées de la mémoire de l'entité gestionnaire B. L'entité de gestion B peut également agréger à la réponse 6 une valeur mise à jour de l'écart temporel DT entre l'heure d'envoi de la requête par l'entité cliente A1 et l'heure de réception par l'entité gestionnaire B.

Dans une étape Stp08 suivante, on réalise la réception, le déchiffrement et la mémorisation de la clé auxiliaire KS1 propre par l'entité cliente A1. Le déchiffrement est réalisé grâce à la clé principale KB1 mémorisée par l'entité cliente. Ainsi l'entité gestionnaire B a pu adresser un message chiffré par une clé qui n'est détenue que par l'entité cliente A1 à qui le message était destiné. Chaque entité cliente A1, A2, AN mémorise, en même temps que les différentes clés, leur(s) paramètre(s) de génération. Un paramètre temporel, un aléa et/ou une date d'expiration utilisés pour générer la clé sont par exemple mémorisés. Le décalage temporel DT mis à jour est également mémorisé par l'entité cliente A1.

Dans une étape Stp09 suivante, on réalise une génération d'une clé dérivée DKS1 de la clé auxiliaire et sa mémorisation. La dérivation est réalisée à partir de la clé auxiliaire KS1 mémorisée et d'au moins un paramètre de dérivation P1, tel qu'un aléa généré par le programme 111 de génération d'aléa. Ce ou ces paramètres de dérivation sont mémorisés en même temps que la clé. Une date d'expiration ou une date de création peuvent également être utilisés comme paramètres de dérivation.

$$DKS1 = Fb(KS1, P1)$$

Dans une étape Stp10 suivante, on réalise le chiffrement d'un contenu destiné à l'entité de contrôle en utilisant la clé auxiliaire dérivée DKS1.

Dans une étape Stp11 suivante on réalise une agrégation en un message M, du contenu chiffré R1 avec le ou les paramètres de génération A1_ID de clé auxiliaire KB1 propre à la première entité A1 et du ou des paramètres de dérivation P1. L'heure d'envoi Tc ou l'heure d'envoi corrigée peut également être intégrée au message M.

Dans une étape Stp12 suivante, on réalise l'envoi, par la entité cliente A1, du message M à l'entité de contrôle S1. Lors de la réception, l'entité de contrôle peut notamment déterminer si la requête lui est parvenue dans une fenêtre temporelle autorisée et ainsi éviter les attaques de type « par rejeu ».

Dans une étape Stp13 suivante, on réalise une détermination, par l'entité de contrôle S1, de la clé de chiffrement par

génération de la clé auxiliaire KS1 à partir du secret auxiliaire S_S et du ou des paramètres de génération A1_ID de clé propres à l'entité cliente A1 fournis en entrée d'un programme de génération de clé puis

dérivation de cette dernière clé KS1, à l'aide du ou des paramètres de dérivation P1 et de la fonction de dérivation pour obtenir la clé auxiliaire dérivée DKS1 utilisée pour chiffrer le contenu R1 du message.

$$KS1 = Fa\ (S\_S,\ A1\_ID)$$

$$DKS1 = Fb\ (KS1,\ P1)$$

Dans une étape Stp14 suivante, on réalise un déchiffrement du contenu chiffré R1 du message M reçu.

Dans une étape Stp15 suivante, on réalise l'envoi d'une réponse au message, la réponse comprenant un contenu chiffré R2 par l'algorithme de chiffrement symétrique à l'aide de la clé auxiliaire dérivée DKS1 précédemment régénérée.

Dans une étape Stp16 suivante, on réalise un effacement de la clé auxiliaire KS1 et de la clé auxiliaire dérivée DKS1 en mémoire de l'entité de contrôle S1.

On ne sort pas du cadre de l'invention lorsque l'entité cliente utilise directement la clé auxiliaire KS1 pour chiffrer le contenu du message envoyé à l'entité de contrôle, l'entité de contrôle n'utilisant que le ou les paramètres de génération de clé auxiliaire pour régénérer la clé auxiliaire KS1 et déchiffrer le contenu du message reçu.

Il doit être évident pour l'homme du métier que la présente invention permet d'autres variantes de réalisation. Par conséquent, les présents modes de réalisation doivent être considérés comme illustrant l'invention.

**Revendications**

1. Procédé (100) de communication sécurisé entre au moins une première entité (A1) et au moins une deuxième entité (S1) en liaison de communication dans au moins un réseau (50, 51, 52, 5M) comprenant :

- une étape de chiffrement, par la première entité, par un algorithme de chiffrement symétrique, d'un contenu par une première clé (DKS1) mémorisée par ladite première entité (A1) et propre à la première entité (A1) ;
- une étape d'agrégation, en un message (M), du contenu chiffré (R1) avec au moins le paramètre de génération (A1_ID) de clé propre à la première entité (A1) ;
- une étape d'envoi, par la première entité (A1), du message (M) à la deuxième entité (S1) ;
- une étape de détermination, par la deuxième entité (S1), de ladite première clé (DKS1) propre à la première entité (A1) à l'aide dudit paramètre de génération (A1_ID) de clé propre à la première entité (A1), d'un premier secret (S_S) connu par la deuxième entité (S1) et d'une fonction de génération de clé (Fb);
- une étape de déchiffrement, par la deuxième entité (S1), du contenu chiffré (R1) du message (M) reçu, à l'aide de la première clé (DKS1), le procédé comprenant des étapes préalables, à savoir :

- une étape de transmission, par chaque première entité (A1, A2, A3, AN), à une entité gestionnaire (B), du paramètre de génération de clé propre à chaque première entité (A1, A2, A3, An) pour l'obtention d'une deuxième clé (KS1);
- une étape de génération, par l'entité gestionnaire (B), de chaque deuxième clé (KS1) propre à chaque première entité (A1, A2, A3, AN), à partir dudit premier secret (S_S) détenu par l'entité gestionnaire (B), dudit paramètre de génération de clé (A1_ID) propre à chaque première entité et de ladite fonction de génération de clé (Fa) ;
- une étape de fourniture de chaque première clé (DKS1) à chaque première entité ; le procédé comprenant des étapes additionnelles à savoir :

- une étape de génération, par chaque première entité (A1), de la première clé (DKS1), par une fonction de dérivation (Fb), à partir de sa deuxième clé (KS1) et d'au moins un paramètre de dérivation (P1),
- une étape d'agrégation, par chaque première entité, dudit paramètre de dérivation (P1) au message (M) destiné à la deuxième entité (S1),
- une étape de dérivation, par la deuxième entité (S1), pour l'obtention de la première clé (DKS1) à partir de la deuxième clé (KS1) générée à partir du premier secret (S_S) et du paramètre de génération (A1_ID) de clé propre à la première entité (A1) fourni en entrée de ladite fonction de génération de clé (Fa);

le procédé étant **caractérisé en ce que** les étapes de transmission du paramètre de génération pour la deuxième clé (KS1) et de fourniture de ladite deuxième clé sont réalisées par l'envoi d'une requête (4) d'obtention de la deuxième clé (KS1) et d'une réponse (6) à cette requête, chaque première entité (A1) étant en liaison de communication avec l'entité gestionnaire (B) dans ledit réseau,

le procédé étant en outre **caractérisé en ce que** la requête (4) d'obtention de la deuxième clé et la réponse (6) à cette requête sont chiffrées à l'aide d'une troisième clé (KB1) mémorisée par chaque première entité et régénérée par l'entité gestionnaire (B) à partir d'un deuxième secret (S_B) détenu par l'entité gestionnaire (B), dudit paramètre de génération (A1_ID) de clé propre à chaque première entité (A1) et de ladite fonction de génération de clé (F), le procédé comprenant des étapes préalables à savoir :

- une étape de transmission, par chaque première entité (A1, A2, A3, An), à l'entité gestionnaire (B), du paramètre (A1_ID) de génération de clé propre à chaque première entité (A1, A2, A3, An) pour l'obtention de la troisième clé (KB1) ;
- une étape de génération, par l'entité gestionnaire (B), de chaque troisième clé (KB1) propre à chaque première entité (A1, A2, A3, An), à partir dudit deuxième secret (S_B) détenu par l'entité gestionnaire (B), dudit paramètre (A1_ID) de génération de clé propre à chaque première entité et de ladite fonction de génération de clé (F) ;
- une étape de fourniture de chaque troisième clé (KB1) à chaque première entité (A1).
- une étape d'effacement, en mémoire de l'entité gestionnaire (B), de chaque troisième clé (KB1).

2. Procédé selon la revendication 1, **caractérisé en ce qu'**il comprend une étape supplémentaire d'envoi d'une réponse au message (M), chiffrée par l'algorithme de chiffrement symétrique à l'aide de la première clé (DKS1) et/ou une étape supplémentaire d'effacement de la première clé (DKS1) en mémoire de la deuxième entité (S1).

3. Procédé selon l'une des revendications précédentes, **caractérisé en ce qu'**il comprend une étape (Stp00) préalable d'initialisation de chaque deuxième entité (S1, S2, S3) comprenant une mémorisation dudit premier secret (S_S).

4. Procédé selon l'une des revendications précédentes, **caractérisé en ce que** ledit paramètre de dérivation (A1_ID) comprend au moins un aléa généré par ladite première entité (A1).
,
,

5. Procédé selon l'une des revendications précédentes, **caractérisé en ce que** la transmission par chaque première entité (A1, A2, A3, An), à l'entité gestionnaire (B), du paramètre (A1_ID) de génération de clé propre à chaque première entité (A1) pour l'obtention de la troisième clé (KB1) est réalisée en même temps qu'une authentification de chaque première entité (A1) auprès de l'entité gestionnaire (B).

6. Procédé selon l'une des revendications précédentes, **caractérisé en ce que** la transmission par chaque première entité (A1), à l'entité gestionnaire (B), du paramètre de génération de clé propre à chaque première entité pour l'obtention de la troisième clé (KB1) est réalisée conjointement à la transmission d'une clé publique, cette clé publique et la clé privée correspondante étant mémorisée par ladite première entité (A1), la troisième clé (KB1) étant ainsi chiffrée à l'aide de cette clé publique, par l'entité gestionnaire (B), préalablement à sa transmission à ladite première entité (A1).

7. Procédé selon l'une des revendications précédentes, **caractérisé en ce que** ledit au moins un paramètre de génération (A1_ID) de clé propre à la première entité (A1) comprend au moins un identifiant de cette première entité.

8. Procédé selon la revendication précédente, **caractérisé en ce que** ledit au moins un paramètre de génération (A1_ID) de clé propre à la première entité (A1) comprend en outre une date d'expiration de la clé générée par la première entité.

9. Système sécurisé d'échange de données entre au moins une première entité (A1) et au moins une deuxième entité (S1) en liaison de communication dans au moins un réseau (50, 51, 52, 5M), lesdites première et deuxième entités comprenant des modules de calcul, de mémorisation et des interfaces de communication réseau, **caractérisé en ce que** chaque première entité mémorise :

- un programme (101) de chiffrement et de déchiffrement par un algorithme de chiffrement symétrique, à partir d'une première clé et

- un programme (102) de transmission de données chiffrées agrégées avec au moins un paramètre propre à la première entité (A1) permettant une génération de la clé, et **en ce que** chaque deuxième entité mémorise :

- un programme (103) de régénération de clé à partir dudit paramètre (A1_ID) de génération de clé propre à la première entité (A1) et d'un secret (S_S) connu par la deuxième entité (S1) et

- un programme (104) de chiffrement et de déchiffrement par ledit algorithme de chiffrement symétrique, à partir de ladite première clé,

le système étant en outre **caractérisé en ce qu'**il comprend une entité gestionnaire comprenant un programme (105) de génération de clé à partir dudit paramètre de génération (A1_ID) de clé propre à chaque première entité (A1) et dudit secret (S_S) détenu par l'entité gestionnaire (B),

et **en ce que** chaque première et deuxième entité comprend un programme (107) de dérivation de clé en fonction d'au moins un paramètre de dérivation (P1),

où la au moins une première entité, la au moins une deuxième entité et l'entité gestionnaire sont adaptées à mettre en oeuvre, en tant que la au moins une première entité, la au moins une deuxième entité et l'entité gestionnaire respectivement, le procédé selon l'une des revendications 1 à 8.

10. Système selon la revendication précédente, **caractérisé en ce que** l'entité gestionnaire (B) comprend un programme (106) d'initialisation de chaque deuxième entité (S1, S2) comprenant l'initialisation du premier secret connu de chaque deuxième entité.

11. Système selon la revendication précédente, **caractérisé en ce qu'**il comprend une pluralité de deuxièmes entités (S1, S2) organisées en au moins un lot, de façon à accéder à une même ressource par le même lot de deuxièmes entités partageant le même secret (S_S).

**Patentansprüche**

1. Gesichertes Kommunikationsverfahren (100) zwischen mindestens einer ersten Einheit (A1) und mindestens einer zweiten Einheit (S1), die in mindestens einem Netzwerk (50, 51, 52, 5M) in Kommunikationsverbindung stehen, wobei das Verfahren umfasst:

- einen Verschlüsselungsschritt durch die erste Einheit durch einen symmetrischen VerschlüsselungsAlgorithmus eines Inhalts durch einen von der ersten Einheit (A1) gespeicherten und der ersten Einheit (A1) eigenen ersten Schlüssel (DKS1);
- einen Aggregationsschritt zu einer Nachricht (M) des verschlüsselten Inhalts (R1) mit mindestens dem der ersten Einheit (A1) eigenen Schlüssel-Generierungsparameter (A1_ID);
- einen Schritt des Sendens der Nachricht (M) durch die erste Einheit (A1) an die zweite Einheit (S1);
- einen Schritt des Bestimmens des der ersten Einheit (A1) eigenen ersten Schlüssels (DKS1) durch die zweite Einheit (S1) anhand des der ersten Einheit (A1) eigenen Schlüssel-Generierungsparameters (A1_ID), eines der zweiten Einheit (S1) bekannten ersten Geheimnisses (S_S) und einer Schlüssel-Generierungs-Funktion (Fb);
- einen Schritt des Entschlüsselns durch die zweite Einheit (S1) des verschlüsselten Inhalts (R1) der erhaltenen Nachricht (M) anhand des ersten Schlüssels (DKS1),

wobei das Verfahren folgende vorausgehende Schritte umfasst:

- einen Übertragungsschritt durch jede erste Einheit (A1, A2, A3, AN) des jeder ersten Einheit (A1, A2, A3, An) eigenen Schlüssel-Generierungs-Parameters an eine Verwaltungseinheit (B), um einen zweiten Schlüssel (KS1) zu erhalten;
- einen Generierungsschritt durch die Verwaltungseinheit (B) jedes jeder ersten Einheit (A1, A2, A3, AN) eigenen zweiten Schlüssels (KS1) ausgehend vom von der Verwaltungseinheit (B) gehüteten ersten Geheimnis (S_S), des jeder ersten Einheit eigenen Schlüssel-Generierungs-Parameters (A1_ID) und der Schlüssel-Generierungs-Funktion (Fa);
- einen Bereitstellungsschritt jedes ersten Schlüssels (DKS1) für jede erste Einheit;

wobei das Verfahren folgende zusätzliche Schritte umfasst:

- einen Generierungsschritt durch jede erste Einheit (A1) des ersten Schlüssels (DKS1) durch eine Ableitungsfunktion (Fb) ausgehend von ihrem zweiten Schlüssel (KS1) und mindestens einem Ableitungsparameter (P1),

- einen Aggregationsschritt durch jede erste Einheit des Ableitungsparameters (P1) an der für die zweite Einheit (S1) bestimmten Nachricht (M),

- einen Ableitungsschritt durch die zweite Einheit (S1), um ausgehend vom zweiten Schlüssel (KS1), der ausgehend vom ersten Geheimnis (S_S) und vom der ersten Einheit (A1) eigenen Schlüssel-Generierungs-Parameter (A1_ID) generiert und am Eingang der Schlüssel-Generierungs-Funktion (Fa) bereitgestellt wird, den ersten Schlüssel (DKS1) zu erhalten;

wobei das Verfahren **dadurch gekennzeichnet ist, dass** die Übertragungsschritte des Generierungs-Parameters für den zweiten Schlüssel (KS1) und die Bereitstellung des zweiten Schlüssels durch Senden eines Antrags (4) auf Erhalt des zweiten Schlüssels (KS1) und einer Antwort (6) auf diese Anfrage durchgeführt werden, wobei jede erste Einheit (A1) in Kommunikationsverbindung mit der Verwaltungseinheit (B) in diesem Netzwerk ist,

wobei das Verfahren zudem **dadurch gekennzeichnet ist, dass** der Antrag (4) auf Erhalt des zweiten Schlüssels und die Antwort (6) auf diesen Antrag mithilfe eines von jeder ersten Einheit gespeicherten dritten Schlüssels (KB1) verschlüsselt werden und von der Verwaltungseinheit (B) ausgehend von einem zweiten von der Verwaltungseinheit (B) gehüteten Geheimnis (S_B), von dem jeder ersten Einheit (A1) eigenen Schlüssel-Generierungs-Parameter (A1_ID) und von der Schlüssel-Generierungs-Funktion (F) regeneriert werden, wobei das Verfahren folgende vorausgehende Schritte umfasst:

    - einen Schritt des Übertragens durch jede erste Einheit (A1,A2,A3,An) an die Verwaltungseinheit (B) des jeder ersten Einheit (A1,A2,A3,An) eigenen Schlüssel-Generierungs-Parameters (A1_ID), um den dritten Schlüssel (KB1) zu erhalten;
    - einen Schritt des Generierens durch die Verwaltungseinheit (B) jedes jeder ersten Einheit (A1,A2,A3,An) eigenen dritten Schlüssels (KB1) ausgehend vom zweiten von der Verwaltungseinheit (B) gehüteten Geheimnis (S_B), vom jeder ersten Einheit eigenen Schlüssel-Generierungs-Parameter (A1_ID) und von der Schlüssel-Generierungs-Funktion (F);
    - einen Schritt des Bereitstellens jedes dritten Schlüssels (KB1) für jede erste Einheit (A1),
    - einen Schritt des Löschens jedes dritten Schlüssels (KB1) aus dem Speicher der Verwaltungseinheit (B).

2. Verfahren nach Anspruch 1, **dadurch gekennzeichnet, dass** es einen zusätzlichen Schritt des Sendens einer durch den symmetrischen Verschlüsselungsalgorithmus mithilfe des ersten Schlüssels (DKS1) verschlüsselten Antwort auf die Nachricht (M) und/oder einen zusätzlichen Schritt des Löschens des ersten Schlüssels (DKS1) aus dem Speicher der zweiten Einheit (S1) umfasst.

3. Verfahren nach einem der vorausgehenden Ansprüche, **dadurch gekennzeichnet, dass** es einen vorausgehenden Schritt (Stp00) des Initialisierens jeder zweiten Einheit (S1,S2,S3) umfasst, der ein Speichern des ersten Geheimnisses (S_S) umfasst.

4. Verfahren nach einem der vorausgehenden Ansprüche, **dadurch gekennzeichnet, dass** der Ableitungsparameter (A1_ID) mindestens eine von der ersten Einheit (A1) generierte Zufälligkeit umfasst.

5. Verfahren nach einem der vorausgehenden Ansprüche, **dadurch gekennzeichnet, dass** die Übertragung durch jede erste Einheit (A1,A2,A3,An) des jeder ersten Einheit (A1) eigenen Schlüssel-Generierungs-Parameters (A1_ID) an die Verwaltungseinheit (B), um den dritten Schlüssel (KB1) zu erhalten, gleichzeitig durchgeführt wird wie eine Authentifizierung jeder ersten Einheit (A1) bei der Verwaltungseinheit (B).

6. Verfahren nach einem der vorausgehenden Ansprüche, **dadurch gekennzeichnet, dass** die Übertragung durch jede erste Einheit (A1) des jeder ersten Einheit eigenen Schlüssel-Generierungs-Parameters an die Verwaltungseinheit (B), um den dritten Schlüssel (KB1) zu erhalten, zusammen mit der Übertragung eines öffentlichen Schlüssels erfolgt, wobei dieser öffentliche Schlüssel und der entsprechende private Schlüssel von der ersten Einheit (A1) gespeichert werden, wobei der dritte Schlüssel (KB1) so anhand dieses öffentlichen Schlüssels durch die Verwaltungseinheit (B) vor seiner Übertragung an die erste Einheit (A1) verschlüsselt wird.

7. Verfahren nach einem der vorausgehenden Ansprüche, **dadurch gekennzeichnet, dass** der mindestens eine der ersten Einheit (A1) eigene Schlüssel-Generierungs-Parameter (A1_ID) mindestens eine Identifizierung dieser ersten Einheit enthält.

8. Verfahren nach vorausgehendem Anspruch, **dadurch gekennzeichnet, dass** der mindestens eine der ersten Einheit (A1) eigene Schlüssel-Generierungs-Parameter (A1_ID) zudem ein von der ersten Einheit generiertes Verfalldatum enthält.

9. Gesichertes Datenaustauschsystem zwischen mindestens einer ersten Einheit (A1) und mindestens einer zweiten Einheit (S1) in Kommunikationsverbindung in mindestens einem Netzwerk (50,51,51,5M), wobei die erste und zweite Einheit Berechnungs- und Speichermodule und Netzwerkkommunikationsschnittstellen umfassen, **dadurch gekennzeichnet, dass** jede erste Einheit speichert:

> - ein Programm (101) zum Verschlüsseln und Entschlüsseln durch einen symmetrischen Verschlüsselungsalgorithmus ausgehend von einem ersten Schlüssel und
> - ein Programm (102) zum Übertragen von verschlüsselten, mit mindestens einem der ersten Einheit (A1) eigenen Parameter zusammengefügten Daten, was ein Generieren des Schlüssels ermöglicht, und dadurch, dass jede zweite Einheit speichert:
> - ein Programm (103) zum Regenerieren des Schlüssels ausgehend vom der ersten Einheit (A1) eigenen Schlüssel-Generierungs-Parameter (A1_ID) und von einem der zweiten Einheit (S1) bekannten Geheimnis (S_S) und
> - ein Programm (104) zum Verschlüsseln und Entschlüsseln durch den symmetrischen Verschlüsselungsalgorithmus ausgehend vom ersten Schlüssel,
> wobei das System zudem **dadurch gekennzeichnet ist, dass** es eine Verwaltungseinheit umfasst, die ein Programm (105) zum Generieren des Schlüssels ausgehend vom jeder ersten Einheit (A1) eigenen Schlüssel-Generierungs-Parameter (A1_ID) und ausgehend vom von der Verwaltungseinheit (B) gehüteten Geheimnis (S_S) umfasst, und
> dadurch, dass jede erste und zweite Einheit ein Programm (107) zum Ableiten des Schlüssels in Abhängigkeit von mindestens einem Ableitungsparameter (P1) umfasst, in dem die mindestens eine erste Einheit, die mindestens eine zweite Einheit und die Verwaltungseinheit dazu geeignet sind, als die mindestens eine erste Einheit, die mindestens eine zweite Einheit und die jeweilige Verwaltungseinheit das Verfahren nach einem der Ansprüche 1 bis 8 anzuwenden.

10. System nach vorausgehendem Anspruch, **dadurch gekennzeichnet, dass** die Verwaltungseinheit (B) ein Programm (106) zum Initialisieren jeder zweiten Einheit (S1,S2) umfasst, was das Initialisieren des jeder zweiten Einheit bekannten ersten Geheimnisses umfasst.

11. System nach vorausgehendem Anspruch, **dadurch gekennzeichnet, dass** es eine Vielzahl von in mindestens einer Gruppe derart organisierten zweiten Einheiten (S1,S2) umfasst, dass über dieselbe Gruppe von zweiten Einheiten, die dasselbe Geheimnis (S_S) teilen, ein Zugang zum gleichen Betriebsmittel möglich ist.

## Claims

1. A method (100) for secure communication between at least one first entity (A1) and at least one second entity (S1) communicatively connected in at least one network (50, 51, 52, 5M) comprising:

> - a step of encrypting, by the first entity, by a symmetric encryption algorithm, a content by a first key (DKS1) stored by said first entity (A1) and specific to the first entity (A1);
> - a step of aggregating, in a message (M), the content (R1) encrypted with at least the parameter for generating (A1_ID) a key specific to the first entity (A1);
> - a step of sending, by the first entity (A1), the message (M) to the second entity (S1);
> - a step of determining, by the second entity (S1), said first key (DKS1) specific to the first entity (A1) using said parameter for generating (A1_ID) a key specific to the first entity (A1), a first secret (S_S) known to the second entity (S1) and a key generation function (Fb);
> - a step of decrypting, by the second entity (S1), the content (R1) encrypted of the message (M) received, using the first key (DKS1),

the method comprising prior steps, namely:

> - a step of transmitting, by each first entity (A1, A2, A3, AN), to a managing entity (B), the parameter for generating a key specific to each first entity (A1, A2, A3, An) for obtaining a second key (KS1);
> - a step of generating, by the managing entity (B), each second key (KS1) specific to each first entity (A1, A2, A3, AN) from said first secret (S_S) held by the managing entity (B), said parameter for generating a key (A1_ID) specific to each first entity and said key generation function (Fa);
> - a step of providing each first key (DKS1) to each first entity;

the method comprising additional steps, namely:

> - a step of generating, by each first entity (A1), the first key (DKS1), by a derivation function (Fb), from its second key (KS1) and at least one derivation parameter (P1),
> - a step of aggregating, by each first entity, said derivation parameter (P1) to the message (M) intended for the second entity (S1),

- a step of deriving, by the second entity (S1), for obtaining the first key (DKS1) from the second key (KS1) generated from the first secret (S_S) and the parameter for generating (A1_ID) a key specific to the first entity (A1) provided as an input to said key generation function (Fa);
the method being **characterised in that** the steps of transmitting the parameter for generating the second key (KS1) and of providing said second key are carried out by sending a request (4) for obtaining the second key (KS1) and a response (6) to this request, each first entity (A1) being communicatively connected with the managing entity (B) in said network,
the method being further **characterised in that** the request (4) for obtaining the second key and the response (6) to this request are encrypted using a third key (KB1) stored by each first entity and regenerated by the managing entity (B) from a second secret (S_B) held by the managing entity (B), said parameter for generating (A1_ID) a key specific to each first entity (A1) and said key generation function (F), the method comprising prior steps namely:

- a step of transmitting, by each first entity (A1, A2, A3, An), to the managing entity (B), the parameter (A1_ID) for generating a key specific to each first entity (A1, A2, A3, An) for obtaining the third key (KB1);
- a step of generating, by the managing entity (B), each third key (KB1) specific to each first entity (A1, A2, A3, An), from said second secret (S_B) held by the managing entity (B), said parameter (A1_ID) for generating a key specific to each first entity and said key generation function (F);
- a step of providing each third key (KB1) to each first entity (A1),
- a step of erasing, from the memory of the managing entity (B), each third key (KB1).

2. The method according to claim 1, **characterised in that** it comprises an additional step of sending a response to the message (M), encrypted by the symmetric encryption algorithm using the first key (DKS1) and/or an additional step of erasing the first key (DKS1) from the memory of the second entity (S1).

3. The method according to one of the preceding claims, **characterised in that** it comprises a prior step (Stp00) of initialising each second entity (S1, S2, S3) comprising storing said first secret (S_S).

4. The method according to one of the preceding claims, **characterised in that** said derivation parameter (A1_ID) comprises at least one random variable generated by said first entity (A1).

5. The method according to one of the preceding claims, **characterised in that** transmitting by each first entity (A1, A2, A3, An), to the managing entity (B), the parameter (A1_ID) for generating a key specific to each first entity (A1) for obtaining the third key (KB1) is carried out at the same time as authenticating each first entity (A1) with the managing entity (B).

6. The method according to one of the preceding claims, **characterised in that** transmitting by each first entity (A1), to the managing entity (B), the parameter for generating a key specific to each first entity for obtaining the third key (KB1) is carried out together with transmitting a public key, this public key and the corresponding private key being stored by said first entity (A1), the third key (KB1) being thus encrypted using this public key, by the managing entity (B), prior to transmitting it to said first entity (A1).

7. The method according to one of the preceding claims, **characterised in that** said at least one parameter for generating (A1_ID) a key specific to the first entity (A1) comprises at least one identifier of this first entity.

8. The method according to the preceding claim, **characterised in that** said at least one parameter for generating (A1_ID) a key specific to the first entity (A1) further comprises an expiry date of the key generated by the first entity.

9. A system for secure data exchange between at least one first entity (A1) and at least one second entity (S1) communicatively connected in at least one network (50, 51, 52, 5M), said first and second entities comprising calculation and storage modules, and network communication interfaces, **characterised in that** each first entity stores:

- a program (101) for encryption and decryption by a symmetric encryption algorithm, from a first key, and
- a program (102) for transmitting aggregated encrypted data with at least one parameter specific to the first entity (A1) allowing the key to be generated,

and **in that** each second entity stores:

- a key regeneration program (103) from said parameter for generating (A1_ID) a key specific to the first entity (A1) and a secret (S_S) known to the second entity (S1) and
- a program (104) for encryption and decryption by said symmetric encryption algorithm, from said first key,
the system being further **characterised in that** it comprises a managing entity comprising a key generation program (105) from said parameter for generating (A1_ID) a key specific to each first entity (A1) and said secret (S_S) held by the managing entity (B),
and **in that** each first and second entity comprises a key derivation program (107) as a function of at least one derivation parameter (P1), where the at least one first entity, the at least one second entity and the managing entity are adapted for implementing, as the at least one first entity, the at least one second entity and the managing entity respectively, the method according to one of claims 1 to 8.

10. The system according to the preceding claim, **characterised in that** the managing entity (B) comprises a program (106) of initialising each second entity (S1, S2) comprising initialising the first secret known to each second entity.

11. The system according to the preceding claim, **characterised in that** it comprises a plurality of second entities (S1, S2) organised in at least one batch, so as to access a same resource by the same batch of second entities sharing the same secret (S_S).

Stp00

Stp01

100

Stp02

Stp03

Stp04

Stp05

Stp06

Stp07

**Fig. 1**

Stp08

Stp09

Stp10

Stp11

Stp12

Stp13

Stp14

Stp15

Stp16

**Fig. 2**

**Fig. 3**

**Fig. 4**

**Fig. 5**

EP 3 725 025 B1